# EUROPEAN PATENT APPLICATION

(11) **EP 0 990 879 A1**
(43) Date of publication of application: **05.04.2000**
(21) Application number: 99118358.3
(22) Date of filing: 16.09.1999
(51) Int. Cl.: G01G 19/08

(54) **Device for weighing a load and the use of it**

(30) Priority: 30.09.1998 DK 123798
(71) Applicant: DANSK MEJERI ELEKTRONIK A/S, DK-8382 Hinnerup (DK)
(72) Inventor: Staehr, Uffe, 8200 Aarhus N (DK); Jensen, Claus Bo, 8520 Lystrup (DK); Thomsen, Niels Holger Haugbolle, 8382 Hinnerup (DK)
(74) Representative: Nielsen, Leif

(57) **Abstract**

The invention concerns a unit for weighing a load. The unit concerns a number of first and second load cells between which there is mounted a carrying element. The carrying element may be a beam if only a single first load cell and a single second load cell is used, and the carrying element may also be a plate if more than a first and/or a second load cell are used. The unit is advantageous in that weighing takes place without any kind of signal processing for compensating moment loads on the load cells. Furthermore, the unit is very stable and sturdy so that the unit may be used in many different applications.

## Description

The present invention concerns a unit for weighing a load, the unit comprising a number of load cells mounted on a chassis for the unit, and where a carrying element intended for carrying the load to be weighed is mounted on the load cells, and where the unit comprises at least one first load cell and at least one second load cell, the load cells being disposed mutually apart as seen in the direction of the force of gravity so that an interspace is formed between the load cells, and where the carrying element is mounted between the first load cell or cells and the second load cell or cells. The invention also concerns a use of such a unit.

EP 255.624 discloses an apparatus for weighing waste containers when the container is emptied into a refuse collecting truck. The apparatus comprises a rocker arm which both is moved in parallel and is pivoted when the content of the waste container is emptied into the refuse collecting truck. The apparatus comprises a number of chain links and load cells disposed in various ways.

This apparatus has the drawback that each construction is very specific and very dependent on the selected configuration of load cells. This implies that the requirement for dimensioning the whole waste emptying construction becomes decisive for the precision of the measurements and that each refuse collecting truck has to be built up from requirements and wishes for placing and configuration of load cells and of the emptying device. Furthermore, the apparatus is only suitable for the specific application and will not readily be transferred to other applications because the construction is so clearly determined by the requirements of the application in question.

WO 91/02957 describes a unit for use in a test apparatus. The unit comprises an arm divided into a first section and a second section. In each end of the arm there is mounted a flexible spring segment, e.g. a piece of leaf spring steel, provided with strain gauges. Between the ends of the arm, the arm is suspended in a further flexible spring segment. The spring segments are flexible in such a way that only real tensile loads are measured by the strain gauges, when the three segments are subjected to load.

For measuring with the unit it is absolutely necessary to know the ratio of the length of the first part of the arm to the length of the second part of the arm, as the unit according to the theory of mechanics is to be viewed as a beam fixed at both ends and where the load results in a force acting at a point between each end of the arm. Furthermore it is necessary that a possible bending of each segment about a vertical axis is of a magnitude making error contributions negligible in measurements where such bending occurs.

Furthermore, it implies considerable limitations in the use of the unit when flexible spring units like leaf springs are used. This reduces considerably the magnitude and the direction of the load that the unit may be subjected to, while at the same time the unit also becomes very sensitive to possible dynamic loads. However, the unit is intended for being used in a test bed in a laboratory where the loads are wellknown and controllable, and the unit is not intended for use in rougher conditions, as outside on a refuse collecting truck with a load, the form and placing of which imply ambiguous force and moment loads.

EP 9230 discloses a certain coupling of stain gauges in a Wheatstone bridge where all three strain gauge bridges are coupled in parallel and with the same polarity. EP 227.850 discloses only a certain embodiment of a single load cell, but do not show a unit with several load cells. The load cell is furthermore only shown with loads in a single plane.

It is the purpose of the present invention to eliminate the above disadvantages and to provide an apparatus which is considerably more simple in order thereby to reduce the sensitivity of the apparatus to the actual construction and to the external loads together with providing an apparatus being able to weigh a load in various applications with moment loads where, because of the form and point of action of the load, the load acts on the apparatus and thereby on the load cells in such a way that the moment loads are not to be determined immediately and are not negligible either.

This purpose is achieved with a unit for weighing being peculiar in that the carrying element has a part extending out of the interspace between the load cells, and that the carrying element has a point of action for the force of gravity of the load to be weighed, the point of action being located on the part of the carrying element situated outside the interspace.

By using otherwise known and tested load cells and disposing them in the manner indicated above and using a carrying element between the load cells, there is provided a unit for weighing applicable to large number of weighing systems, whether the weighing takes place on a vertical or horizontal support frame, on a horizontal platform or by means of having the load suspended in the carrying element. At the same time there is provided a very reliable unit as no movable elements exist, but where in principle all displacement occurs in the load cells in connection with the weighing.

In a preferred embodiment, the load cells are provided with strain gauges for measuring the load on the load cells, where the strain gauges at each load cell form a Wheatstone bridge, and where the strain gauges at the first load cells are mutually coupled in parallel with mutually rectified polarity and the strain gauges at the second load cells are also mutually coupled in parallel with mutually rectified polarity, and where the unit is peculiar in that the strain gauges at the second load cells are coupled in parallel with the first load cells as well, but with reversed polarity as compared with the first load cells.

By coupling the load cells in this way, weighing with the load cells takes place directly without any kind of initial calculation. By the above mentioned coupling, the load cells are outbalanced with respect to the moment loads occurring between the mounting positions of the load cells on the carrying element. This means that the data processing equipment can be made considerably simpler while at the same time the uncertainties occurring in weighing are purely physically conditioned, i.e. depending on uncertainties in each of the load cells and on the rigidity of the chassis and carrying element.

In principle, the rigidity of chassis and carrying element has to be infinitely great so that all loads are transferred to and received by the load cells.

Very good conditions for weighing a load are achieved by using a unit where the force from the load applied to the load cells acts at a point outside the interspace between the load cells, which, by reference to the theory of mechanics, in other words means the point where the force of gravity acts on the carrying element outside the fixation established between the load cells. This is especially the case under conditions where the form of the load and the way in which the load is suspended by the carrying beam is accommodated to certain practical conditions, e.g. a waste container hanging on a refuse collecting truck during emptying.

The part of the carrying element extending outside the interspace between the load cells can be viewed as a beam fixed at one end. The fixation will be located at the point where the load cell closest to the point of action of the gravitational force holds the carrying element. The moment about the point where the nearest load cell holds the carrying element will be the gravitational force multiplied with the distance between this point and the point of action of the gravitational force, i.e. force times arm.

The part of the carrying element extending within the interspace between the load cells can be viewed as a beam fixed at both ends. The fixation will both be located at the point where the load cell closest to the point of action of the gravitational force holds the carrying element and located at the point where the load cell farthest from the point of action of the gravitational force holds the carrying element.

There will not be any force acting on the carrying element in the interspace between the load cells, as the only acting force is the force of gravity at the point outside the interspace between the load cells. However, there will be a moment coming from the load and acting on the carrying element at one of the fixations, namely at the point where load cell closest to the point of action of the gravitational force holds the carrying element. This moment is, as mentioned above, the gravitational force multiplied with the distance between this point and the point of action of the gravitational force.

Besides, in the point where the load cell closest to the point of action of the gravitational force holds the carrying element, there will be a force equal to the force of gravity.

For a beam fixed at both ends, the moment at the point where the load cell farthest away holds the carrying element is the same as the moment in the nearest load cell, but with opposite direction. This means that the measurings of the moments will cancel each other with respect to the closest load cell and the load cell farthest away, respectively.

Furthermore, for a beam fixed at both ends, but where the fixations can be displaced vertically upwards and downwards because of the holding at the load cells, then the force in the closest load cell and load cell farthest away, respectively, be relative to the gravitational force, but the sum of the forces at the closest load cell and load cell farthest away will be equal to the force of gravity.

In the above, the technical effect of the invention is described with reference to a construction consisting of a single load cell closest to the point of action of the gravitational force and a single load cell farthest away from the point of action of the load cell. It will be possible to apply the same considerations where there is more than a single load cell at the position/positions of either/both the closest load cell or/and the load cell farthest away. The point of fixation will thus be a common point between the load cells appearing from usual geometric conditions. Forces and moments, respectively, for constructions with a plurality of close and/or distant load cells, respectively, will only be absorbed and measured by the plural load cells in unity depending on the placing of the common point between the close and/or distant load cells.

In a preferred embodiment for the number and placing of the load cells, the unit is peculiar in that it comprises at least two first load cells and one second load cell, that the two first load cells and the second load cell form a triangular interspace as seen in the direction of the force of gravity, and that the part of the carrying element situated outside the interspace extends opposite to the second load cell in relation to the two first load cells.

By using two first load cells and a single second load cell with the carrying element mounted as indicated above, there is achieved a construction being stable with respect to possible uneven loads where the weight of the load do not act in a possible plane of symmetry of the unit, but acts outside such a plane of symmetry. By using more than one first load cell and a single or a plurality of second load cells it will still be possible to achieve a unit which is outbalanced with respect to moments so that the previously mentioned advantages by direct weighing are achieved.

The invention will hereafter be described with reference to the accompanying drawing, where
- Fig. 1: is a schematic side view of a first embodiment of a unit according to the invention,
- Fig. 2: is a schematic view from above of the first embodiment of the unit according to the invention,
- Fig. 3: is a schematic side view of a second and preferred embodiment of the unit according to the invention,
- Fig. 4: is a schematic view from above of a second and preferred embodiment of the unit according to the invention,
- Fig. 5: is a diagram over the electric circuit between the load cells in the second and preferred embodiment of the unit according to the invention,
- Fig. 6: is a first photo showing the use of units according to the invention on a refuse collecting truck,
- Fig. 7: is a second photo showing the use of units according to the invention on a refuse collecting truck,
- Fig. 8: is a third photo showing the use of a unit according to the invention on a refuse collecting truck,
- Fig. 9: is a fourth photo showing the use of a unit according to the invention on a refuse collecting truck,
- Fig. 10: is a fifth photo showing the use of a unit according to the invention on a refuse collecting truck.

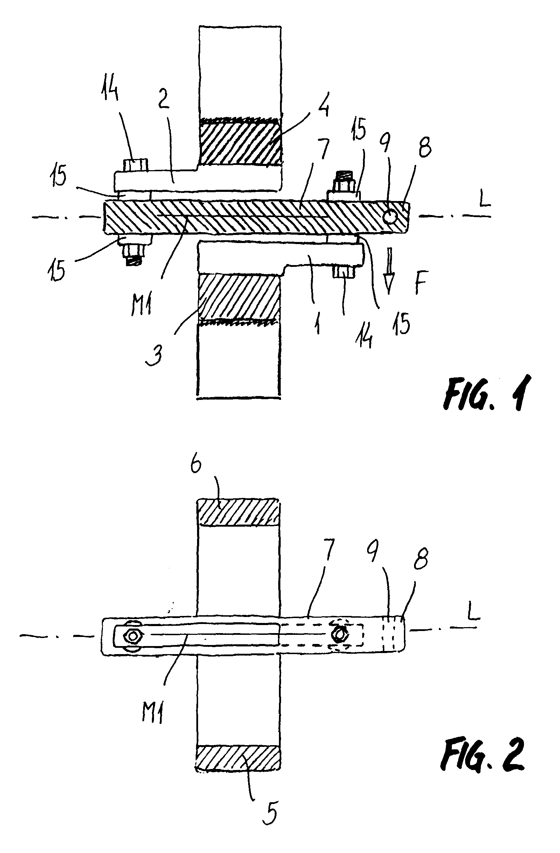

Figs. 1 and 2 are schematic drawings showing a possible embodiment of a unit for weighing a load. The unit comprises a single first load cell 1 of known kind and a single second load cell 2 of known kind. The first load cell 1 is mounted on a first chassis element 3 and the second load cell 2 is mounted on a second chassis element 4. The first chassis element 3 and the second chassis element 4 are fastened to side members 5,6 so that the chassis elements 3,4 and the side members 5,6 form an entire chassis constituting reference for weighing with the load cells 1,2. The chassis 3,4,5,6 is dimensioned in such a way that the rigidity of the chassis is of a magnitude implying that possible deflections of chassis elements 3,4 or side members 5,6 may be ignored when weighing a load with the load cells 1,2.

Between the load cells 1,2 there is mounted a carrying element comprising a beam 7 which extends between the load cells 1,2 and which has a part 8 projecting out from the load cells. The load cells are disposed at a distance from each other and thus there is formed an elongated interspace M1 between the load cells 1,2. The beam 7 is extending both in the interspace M1 and outside the interspace. The beam 7 is dimensioned so that the rigidity of the beam 7 is of a magnitude implying that possible deflection of the beam 7 may be ignored by the weighing of load with the load cells 1,2. In the part 8 of the beam 7 extending outside the interspace M1 there is formed an eye 9 in the shown embodiment. The eye 9 is intended for forming the point of suspension of the load to be weighed so that the eye form the point of action for the force of gravity F on the beam 7. With the shown construction it is possible to weigh an arbitrary load suspended in the eye 9, the gravitational force F of which only acting on the beam 7 in downward direction and not acting on the beam 7 with a torque about a longitudinal axis L of the beam 7. Instead of an eye 9 there may be formed a hook or another means for suspending a load.

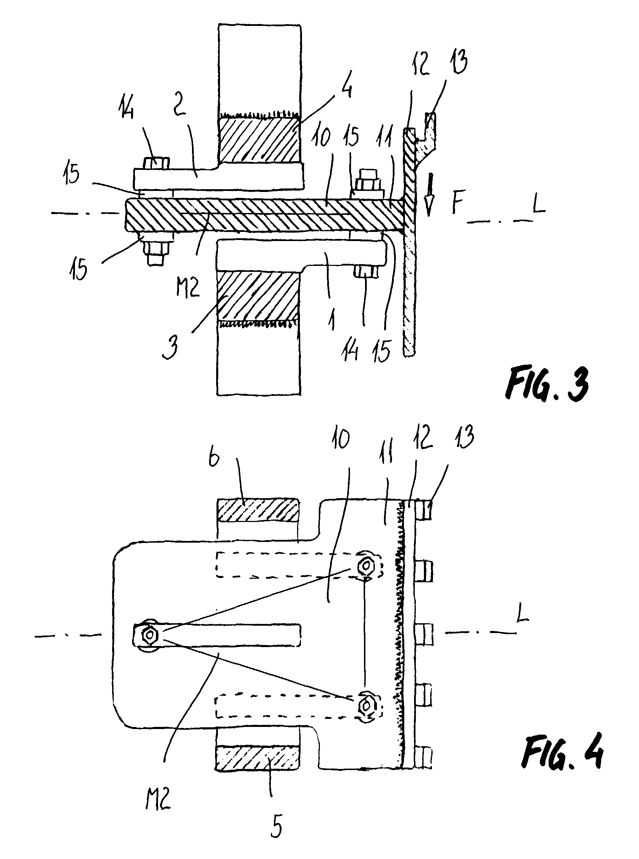

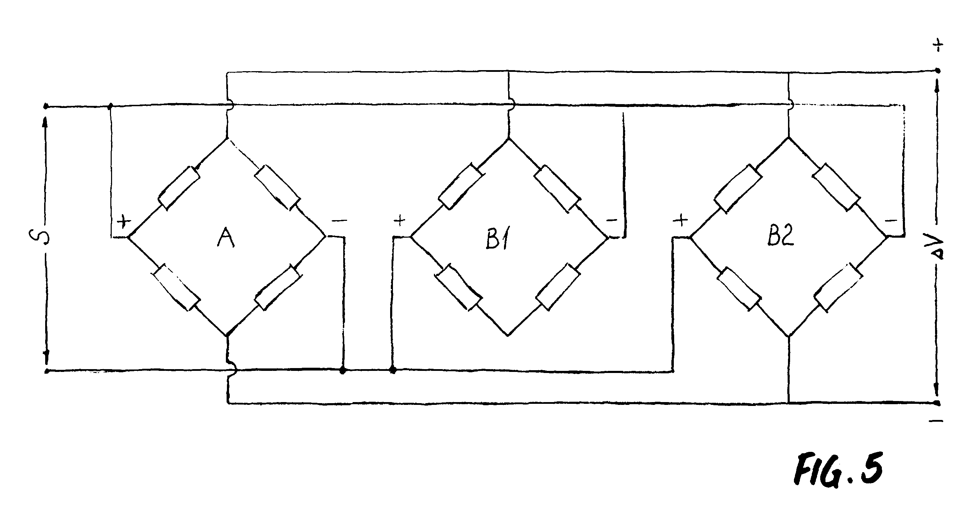

Figs. 3 and 4 are schematic drawings showing a second, preferred embodiment of a unit for weighing a load. The unit comprises two first load cells 1 of known kind and a single second load cell 2 of known kind. The first load cells 1 are mounted on the first chassis element 3 and the second load cell 2 is mounted on the second chassis element 4. The first chassis element 3 and the second chassis element 4 is fastened to the side members 5,6 so that the chassis elements 3,4 and the side members 5,6 form the assembled chassis constituting the reference for weighing with the load cells 1,2. The chassis 3,4,5,6 is dimensioned so that the rigidity of the chassis is of a magnitude implying that possible deflections of chassis elements 3,4 or side members 5,6 may be ignored when weighing a load with the load cells 1,2.

Between the load cells 1,2 there is mounted a carrying element comprising a support plate 10 which extends between the load cells 1,2 and has a part 11 situated outside the load cells 1,2. The load cells 1,2 are disposed mutually apart and thus there is formed a triangular interspace M2 between the load cells. The support plate 10 is extending both in the interspace M2 and outside the interspace. The support plate 10 is dimensioned so that the rigidity of the support plate 10 is of a magnitude implying that possible deflection of the support plate 10 may be ignored by weighing a load with the load cells 1,2.

In the shown embodiment, in the part 11 of the support plate 10 extending outside the interspace M2, there is mounted a carrying frame 12 extending perpendicularly to the support plate 10. The carrying frame 12 is intended to carry the load to be weighed. With the shown construction it is possible to weigh an arbitrary load suspended by the carrying frame with its gravitational force F acting on carrying frame 12 and thereby the support plate 10 in downward direction and which possibly simultaneously acts on support plate 10 with a torque about a longitudinal axis L in a plane of symmetry for the unit. Instead of a carrying frame 12 a hook or another means for suspending a load may be provided. The carrying frame 12 in the shown embodiment is provided with hooks 13 for use in suspending a load from the carrying frame 12.

The carrying element in the form of beam 7 or support plate 10 in Figs. 1, 2, 3, and 4 is preferably attached to the load cells 1,2 by means of screw bolts 14 extending through holes (not shown) in the beam 7 and the support plate 10, respectively, and in the load cells 1,2. Between the beam 7 and support plate 10, respectively, and the load cells 1,2 and the screw bolts 14, respectively, there is provided ball sockets 15 so that load cells 1,2 as far as possible are not influenced by twisting moments.

In other, not shown embodiments according to the invention, e.g. two first load cells 1 may be combined with two second load cells 2 forming a rectangular interspace between. Likewise, combinations with three or more first load cells and/or second load cells may be envisioned within the scope of the invention.

Fig. 5 shows an electric circuit between three load cells A,B1,B2, each provided with four strain gauges S indicated as four electric resistances. The circuit between the three load cells A,B1,B2 corresponds to the circuit in a unit as shown in Figs. 3 and 4 with two first load cells 1 with strain gauges corresponding to B1 and B2, and a single second load cell 2 with strain gauges corresponding to A. Each of the four strain gauges in the three load cells A,B1,B2 are in a known way connected as a Wheatstone bridge. The strain gauges in the two first load cells B1,B2 are connected in parallel with same polarity from the voltage supply ΔV. The strain gauges in the single second load cell A is likewise coupled in parallel with the strain gauges in the two first load cells B1,B2, but compared with the strain gauges of the two first load cells with opposite polarity from the voltage supply ΔV.

The shown coupling of the strain gauges of the first load cells B1, B2 and the second load cell A, respectively, can be used for an arbitrary number of first load cells and an arbitrary number of second load cells. By coupling the strain gauges in the load cells in the way described there is achieved the advantage that weighing with the unit according to the invention can take place directly. With the construction shown in Figs. 3 and 4 or in constructions with an other arbitrary number of first and second load cells with an electric coupling as shown between the strain gauges in the load cells, the total signal S from the load cells will result in a direct measure of the load weighed. No consideration is to be taken to which distance from the load cells the gravitational force F acts on the support element 7 or 10, as the shown coupling provides outbalancing of the force contributions from moments coming from the load.

As an alternative to load cells with strain gauges and coupling of these in Wheatstone bridges it is possible to use other kinds of load cells, e.g. digital load cells, where the signal from the load cells is processed electronically without the use of Wheatstone bridges. Furthermore, for the shown load cells it will also be possible to process the signal from the load cells electronically with or without use of Wheatstone bridges.

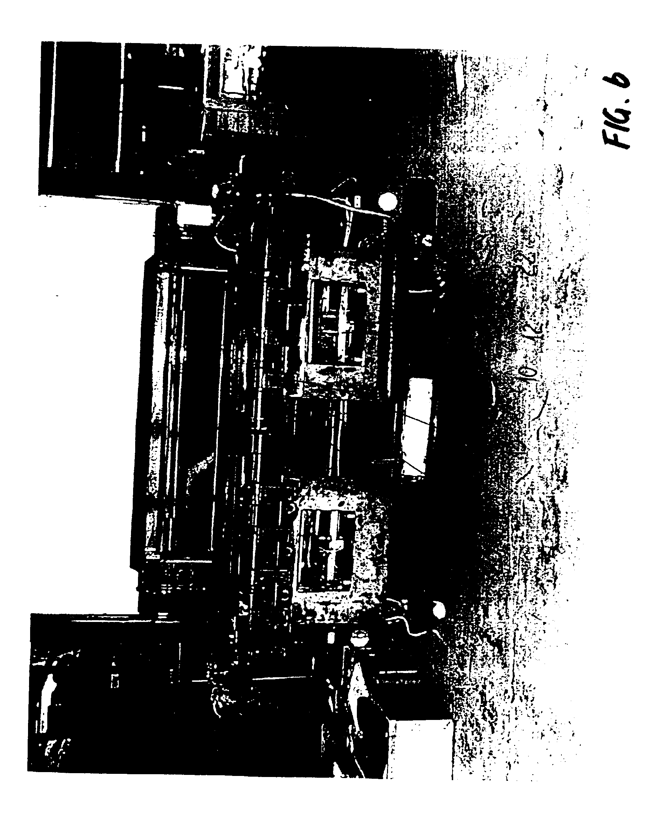

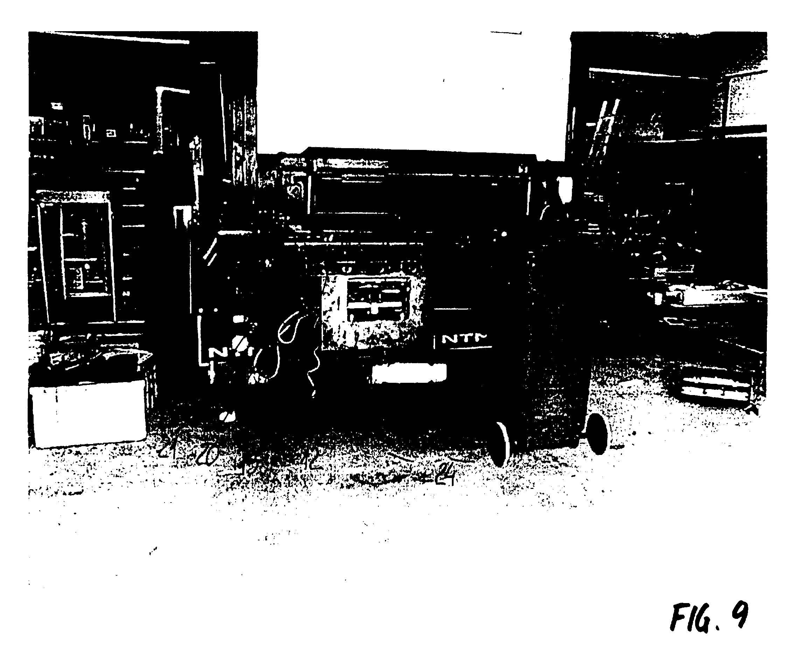

Fig. 6 shows two units according to the invention mounted on a refuse collecting truck and used for weighing load in a waste container (see Fig. 9) in connection with emptying the waste container into a refuse collecting truck. The photography shows units as depicted schematically in Figs. 3 and 4. The carrying frames 12 for suspending the load is shown and within the carrying frames 12 the carrying element 10 and the second load cell 2 are seen faintly. The carrying frames 12 are attached to a lifting and lowering system on the refuse collecting truck by means of a hinge mechanism 20, and the units are thereby capable of pivoting about an axle 21 in the lifting and lowering system. The carrying frames 12 are provided with four hooks 13 at the top extending upwards from the carrying frame 12, and one of the carrying frames 12 is provided with a rubber sleeve 22 lowermost forming abutment between a side of the waste container (see Fig. 9) and the carrying frame 12 when the waste container is suspended in the hooks 13 at the top of the carrying frame 12.

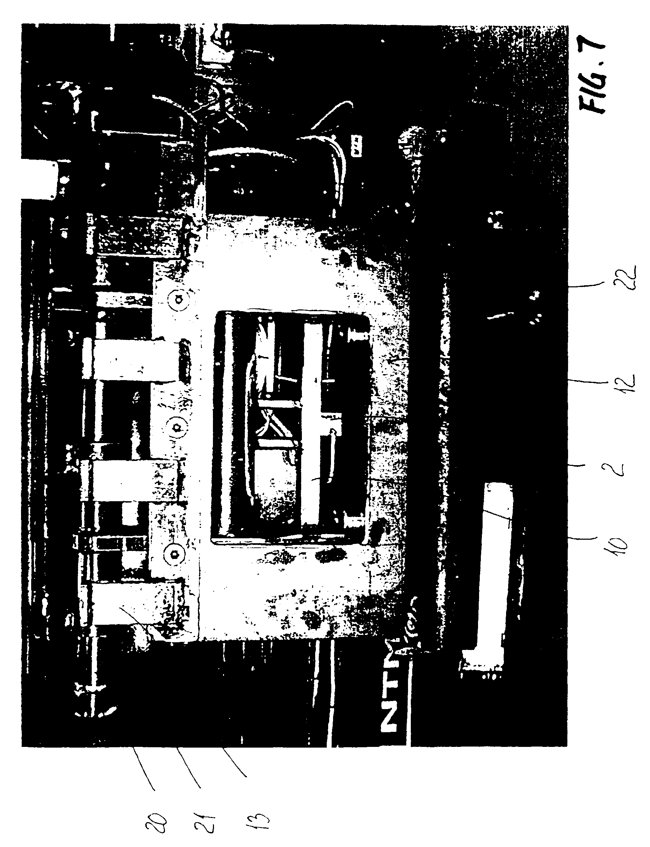

Fig. 7 shows a front view of one of the units in Fig. 6. The figure shows the carrying frame 12, the hooks 13 at the top of the carrying frame 12, the rubber sleeve 22 lowermost on the carrying frame 12 and the two first load cells 1, the second load cell 2, and the support plate 10 which together with the carrying frame 12 constitute the carrying element. The carrying frame 12 is, as mentioned, hinged to an axle 21 in a lifting and lowering mechanism, and the carrying frame 12 and the support plate 10 constituting the carrying element and a part of the weighing unit is capable of pivoting about the axle 21 by means of the hinge mechanism 20. Pivoting of the weighing unit about the axle 21 takes place when the unit is in a lifted position where waste in the waste container (see Fig. 9) has to be emptied into the refuse collecting truck.

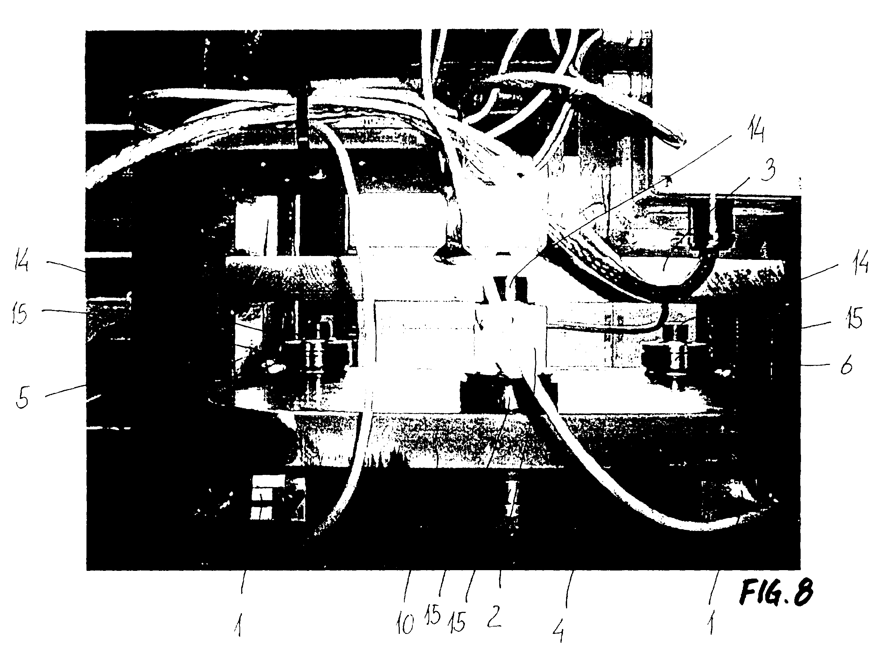

Fig. 8 shows a rear view of the unit in Fig. 7. The figure shows the two first load cells 1, the second load cell 2, and the support plate 10 together with the first chassis element 3, the second chassis element 4, and the side members 5,6 having the chassis elements 3,4 fastened to them. The load cells 1,2 are disposed mutually at a distance so that mounting of the two first load cells 1 occurs at the foremost part of the support plate 10 (note that the figure shows a rear view of the unit), and so that mounting of the second load cell 2 occurs at the rearmost part of the support plate 10. Thereby a triangular interspace M2 between the three mounting locations for the three load cells 1,2 and the support plate 10 is formed.

The support plate 10 is attached to the load cells 1,2 by means of screw bolts 14 extending through holes (not shown) in the support plate 10, clamping the support plate 10 to the load cells 1,2. Between the load cells 1,2 and the support plate 10, and between the screw bolts 14 and the support plate 10, respectively, there is provided ball sockets 15 so that possible twisting moments imparted to the support plate 10 via the carrying frame 12 by the load as far as possible is not transmitted to the load cells 1,2. In that case, this may influence the precision of the measurement by the load cells 1,2.

Fig. 9 shows a waste container 23 immediately before or after emptying the waste container 23 and suspended on the hooks 13 at the top of the carrying frame 12 constituting a part of the carrying element of the unit. An edge 24 of the waste container has a downward directed groove (not shown) which the hooks 13 project into. Weighing of the waste container takes place by the lifting and lowering mechanism initially lifting the weighing unit and thereby the waste container 23 a distance above the ground. Weighing takes place subsequently. The waste container is hereby lifted further and the weighing unit and thereby the waste container are then pivoted about the hinge mechanism 20 so that the content of the waste container is poured into the refuse collecting truck. Hereafter the weighing unit and with it the waste container are pivoted back to the initial position and the waste container is weighed again. Then the lifting and lowering system is lowered again and the waste container may subsequently be removed from the carrying frame 12.

The first weighing of the waste container before the waste container is emptied from waste may take place simultaneously with the waste container being lifted to its emptying position. Correspondingly, the second weighing of the waste container after the container having been emptied can take place simultaneously with the waste container being lowered to its starting position. By performing weighing at the same time as the waste container is lifted and lowered, respectively, time is saved. The difference between the first weighing and the second weighing of the waste container indicates the amount of waste received by the refuse collecting truck and can e.g. be used in connection with calculating the refuse collecting fee for the household or the firm having the refuse removed.

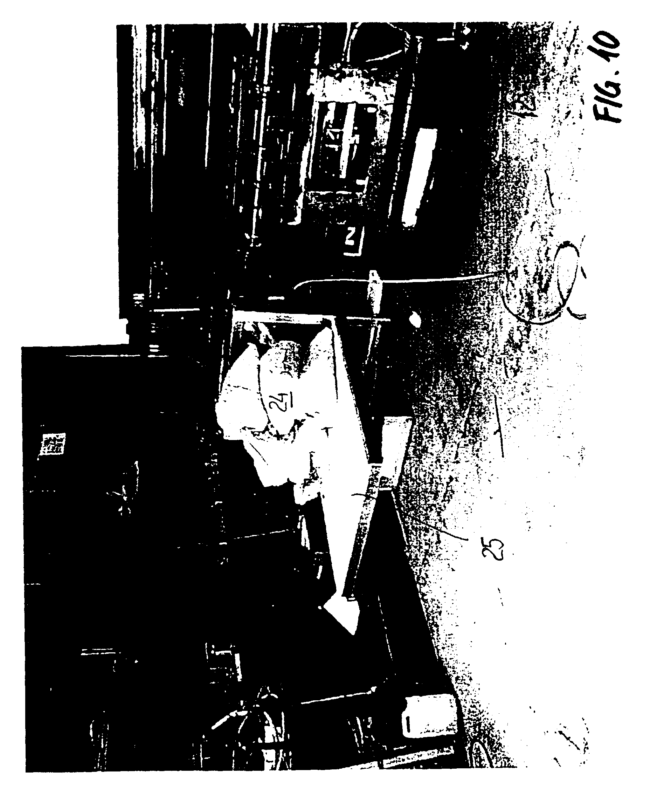

Fig. 10 shows weighing of other load than a waste container. In the shown embodiment, one of the units are used for weighing sacks 24 placed on a platform 25. The platform 25 may either be suspended on the carrying frame 12 in the same way as the waste container (see Fig. 9) is suspended on the carrying frame 12, or the platform 25 can be fastened to the support plate 10 instead of the carrying frame 12. Weighing of the sacks 24 is independent of whether the sacks are disposed innermost on the platform 25 as shown or are placed outermost on the platform 25, as weighing with the unit according to the invention, as mentioned previously, is independent of the load generated moments acting on the support plate 10.

The applications of the weighing unit according to the invention shown in Figs. 6 - 10 are in connection with a mobile application, namely a vehicle. By using non-stationary equipment of which the weighing unit form a part there may be a risk of the mobile application not being completely horizontal, and thereby error may arise in the measurement with the load cells as a consequence of the force of gravity not acting on the load cells as intended. This may be compensated for by electronically processing the signals from the load cells by means of a inclination compensator known per se which provide for the inclination relative to the vertical direction, equal to the direction of gravitational force, of the mobile application and thereby the weighing unit.

The invention has been described above with reference to specific embodiments with a possible number of first and second load cells. It is possible to use an arbitrary number of first and second load cells, the total signal of which only constitutes a part of the load weighed. By coupling the strain gauges in the load cells as shown in Fig. 5 it is not in any way necessary to take account of the number of first and second load cells as the signal from the load cells will indicate the weight of the weighed load independently of the number of first and second load cells. The invention is furthermore described with reference to the weighing of a waste container on a carrying frame on a unit mounted on a refine collecting truck and with reference to the weighing of sacks on a platform. It will be possible to use the unit according to the invention for any kind of weighing irrespectively of the matter to be weighed and irrespectively of the application of the unit. Thus the unit e.g. can be used for weighing a load on the forks of a fork-lift or for weighing the load suspended from a hook in a crane.

## Claims

1. A unit for weighing a load, the unit comprising a number of load cells (1,2) mounted on a chassis (3,4,5,6) for the unit, and where a carrying element (7,10) intended for carrying the load to be weighed is mounted on the load cells (1,2), and where the unit comprises at least one first load cell (1) and at least one second load cell (2), the load cells (1,2) being disposed mutually apart as seen in the direction of the force of gravity (F) so that an interspace (M1,M2) is formed between the load cells (1,2), and where the carrying element (7,10) is mounted between the first load cell or cells (1) and the second load cell or cells (2), characterised in that the carrying element (7,10) has a part (8,11) extending out of the interspace (M1,M2) between the load cells (1,2), and that the carrying element (7,10) has a point of action for the force of gravity (F) of the load to be weighed, the point of action being located on the part (8,11) of the carrying element situated outside the interspace (M1,M2).

2. A unit according to claim 1, wherein the unit has one first load cell (1) and one second load cell (2), that the interspace (M1) between the first load cell (1) and the second load cell (2) is located along a line between the load cells (1,2) and that the part (8) of the carrying element (7) situated outside the interspace (M1) is extended in prolongation of the line between the load cells (1,2).

3. A unit according to claim 1, wherein the unit comprises at least two first load cells (1) and one second load cell (2), that the two first load cells (1) and the second load cell (2) form a triangular interspace (M2) as seen in the direction of the force of gravity, and that the part (11) of the carrying element (10) situated outside the interspace (M2) extends opposite to the second load cell (2) in relation to the two first load cells (1).

4. A unit according to any preceding claim, wherein the unit comprises two first load cells (1) and two second load cells (2), that the two first load cells (1) and the two second load cells (2) form a four-sided interspace as seen in the direction of the force of gravity (F), and that the part of the carrying element situated outside the interspace extends opposite to the two second load cells (2) in relation to the two first load cells (1).

5. A unit according to any preceding claim, where the load cells (1,2) are provided with strain gauges for measuring the load on the load cells (1,2), where the strain gauges at each load cell form a Wheatstone bridge (A,B1,B2), and where the strain gauges (B1,B2) at the first load cells (1) are mutually coupled in parallel with mutually rectified polarity and the strain gauges (A) at the second load cells (2) are also mutually coupled in parallel with mutually rectified polarity, wherein the strain gauges (A) at the second load cells (2) are coupled in parallel with the first load cells (1) as well, but with reversed polarity as compared with the first load cells (1).

6. A unit according to claim 2, wherein the carrying element comprises a beam (7) extending between the first load cell (1) and the second cell (2).

7. A unit according to claim 3, wherein the carrying element comprises a support plate (10) which at its underside, alternatively top side, has been mounted on the two first load cells (1), and which at its top side, alternatively underside, has been mounted on the second load cell (2).

8. Use of a unit according to any preceding claim for weighing the load of a waste container on a refuse collecting truck in connection with emptying the waste container into the refuse collecting truck.

9. Use of a unit according to any of claims 1 - 7 for weighing the load of a body on forks or a platform on a lifting and transporting device in connection with transport of the body.
